# EUROPEAN PATENT APPLICATION

(11) **EP 4 497 582 A1**
(43) Date of publication of application: **29.01.2025**
(21) Application number: 23188370.3
(22) Date of filing: 28.07.2023
(51) Int. Cl.: B29C 70/86, B29D 99/00, F03D 1/06

(54) **METHOD FOR MANUFACTURING A WIND TURBINE BLADE AND WIND TURBINE BLADE**

(71) Applicant: Siemens Gamesa Renewable Energy A/S, 7330 Brande (DK)
(72) Inventor: Mimo, Matteo, 9530 Støvring (DK); Olesen, Bendt, 9270 Klarup (DK)
(74) Representative: SGRE-Association

(57) **Abstract**

The present invention relates to a method for manufacturing a wind turbine blade (1), comprising the steps:
a) Premanufacturing an outboard blade section (15) by lamination of one or multiple layers of fiber material, wherein the premanufactured outboard blade section (15) comprises a main joining region (11) at an inboard end (151),
b) Providing an openable mold (3) having the shape of a negative impression of an inboard blade section (16) of the wind turbine blade (1),
c) Inserting the premanufactured outboard blade section (15) at least with the main joining region (11) into the openable mold (3);
d) Extending the premanufactured outboard blade section (15) with an inboard blade section (16) by lamination of one or multiple layers of fiber material (45,46,85,86) in the openable mold (3), thereby connecting the main joining region (11) of the premanufactured outboard blade section (15) to the inboard blade section (16).

The method involves less steps than current manufacturing methods and can, even with further increasing blade lengths, be executed within existing production facilities.

## Description

The present invention relates to a method for manufacturing a wind turbine blade and to a wind turbine blade manufactured according to the method.

Wind turbine blades, especially for offshore use, continuously increase in size with the evolvement of technology. Regarding the main dimensions, current blades can reach root diameters of approximately 6m and a blade length of well over 100 m, while typical chord lengths can reach up to 8 m.

As the dimensions of the blades are literally tremendous and the size of production sites is limited, the production of wind turbine blades today often involves pre-manufacturing of longitudinal blade sections that are joined together in subsequent production steps.

In the production of wind turbine blade sections there are different approaches with regards to the material layup of fiber material: On the one hand a root to tip material layup and on the other hand a transversal material layup. Within the transversal material layup approach the IntegralBlade^{®} technology that is described in detail in EP 1 310 351 A1 plays an important role as it avoids glue joints at the leading edge and/or trailing edge of the blade that are both disadvantageous from an aerodynamic perspective and a mechanical stiffness perspective. Rather, the entire blade is produced as a single piece with continuous fiber plies at the leading and the trailing edge.

EP 2 106 900 A1 describes a method for manufacturing a wind turbine blade using vacuum-assisted resin transfer molding (VARTM) of fiber-reinforced laminated structures. The invention introduces a mold for VARTM that includes a first mold part and a second mold part. The first mold part defines a negative impression of the laminated structure and supports the fiber reinforcement layers. The second mold part is connected to the first mold part to enclose the space that can be evacuated. The core of the disclosure lies in the formation of at least one flow duct for guiding a liquid polymer within the mold parts. The flow duct is recessed and open towards the enclosed space, extending along a section of the mold parts' periphery. During the VARTM process, the flow duct remains free of any material until the resin injection begins. The liquid polymer is injected into the flow duct from an inlet port connected to a resin reservoir. As the flow duct fills with resin, it gradually flows into the fiber and core materials of the laminated structure. Once the resin cures and the mold is removed, any surplus resin remaining in the flow duct can be mechanically removed.

EP 3 838 576 A1 describes a method for manufacturing a wind turbine blade using a combination of pre-casted fiber lay-up and dry fiber lay-up techniques. According to the method described therein firstly an upper mold comprising a pre-casted fiber lay-up is placed on a lower mold comprising a dry fiber lay-up and a mold core. Then, vacuum is applied to a space between the upper and lower molds and the mold core. Subsequently, at least the dry fiber lay-up and a connection region between the dry fiber lay-up and the pre-casted fiber lay-up is infused with a resin followed by a curing step.

WO 2021/069272 A1 relates to a method for manufacturing a structural element of a wind turbine blade. The method includes the step of forming of at least one injection hole in at least one laminate provided on a top side of a core material of a first portion and a second portion of the structural element and a bottom side of a core material of the first portion and the second portion, so that the at least one injection hole is fluidically connected to the cavity. Further, the method includes the step of injecting adhesive through the injection hole into the cavity, curing the adhesive injected into the cavity and thereby forming a joint between an end of the core material of the first portion and an end of the core material of the second portion.

Blade sections, in particular longitudinal blade sections, that have been, for example, produced by the IntegralBlade^{®} technology in a subsequent step have to be joined together. The prior art offers various solutions for this, wherein some solutions are based on lamination technology and others based on mechanical connecting elements, such as bolts.

WO 2020/244902 A1 discloses a method for manufacturing a wind turbine blade from at least two longitudinally split blade sections. To connect the two blade sections a joining adapter comprising a fiber layup is arranged inside the two blade sections between joining interfaces on either side so that it overlaps at least partially with both the first and the second blade section. In the region of their joining interfaces the blade sections are tapered on the inside, wherein the joining adapter is correspondingly tapered on the outside to mate with the inside tapered joining interfaces of the blade sections. In a subsequent step, the joining region is tightly sealed with vacuum bags both on the outside and the inside of the blade and the joining region is evacuated. Subsequently, a curable resin is injected into the evacuated joining region. The curable resin penetrates into the fiber structure of the fiber layup of the joining adapter and to adjacent fibers at the joining interfaces of both blade sections. The curable resin then cures under an exothermic reaction.

WO 2021/073842 A1 discloses another method for assembling blade parts of a wind turbine blade, wherein the method includes a customization and/or custom selection of a suitable joining adapter based on the individual geometry of the joining interfaces of the first and second blade sections.

EP 2 105 609 A2 discloses a mechanical flange joint for blade sections of a wind turbine that includes one or many bolts that are equipped with sensors to control the load on the bolts during the life of the blade.

WO 2022/101055 A1 describes a method for joining components or sub-modules of a rotor blade used in wind turbines. The method involves the use of a resistive element and a thermoplastic or weldable thermoset resin. The resistive element, which can be embedded in one or more of the components, generates heat when a current is applied to it. The thermoplastic or weldable thermoset resin is placed between the components and can be in the form of a resin strip or resin-rich surface layers. The resistive element remains in the rotor blade after joining.

EP 2 647 494 A1 describes a manufacturing method for a component of a module of a wind turbine blade. The method involves two main steps of a) Manufacturing a joint laminate of a composite material with embedded joining elements, which will become a part of the component and b) Manufacturing the component using the joint laminate as a preform. The joint laminate is preferably manufactured in a cured state to facilitate transportation to the wind turbine manufacturing plants. The component of the split blade can be manufactured either in a bivalent mold adaptable to produce both unitary and split blade components, or in a specific mold designed for it.

The downside to the split blade manufacturing methods described in the prior art is however that they require manufacturing of two separate blade sections followed by a joining step which is inefficient, both regarding the number of method steps and regarding the complexity of the premanufactured blade sections, especially as both blade sections that are to be joined require a joining region at a respective interface location. The manufacturing of joining regions is known to be complex, to require a significant amount of manual labor and to be expensive.

Therefore, it is an object of the present invention to provide a method for manufacturing a wind turbine blade that involves less steps and - even with further increasing blade lengths - can be executed within existing production facilities.

It is a further object of the present invention to provide a wind turbine blade that can be produced more efficiently.

Accordingly, a method for manufacturing a wind turbine blade is proposed.

The method according to the invention comprises the following steps:
a) Premanufacturing an outboard blade section by lamination of one or multiple layers of fiber material, wherein the outboard blade section comprises a main joining region at an inboard end,
b) Providing an openable mold having the shape of a negative impression of an inboard blade section of the wind turbine blade,
c) Inserting the premanufactured outboard blade section at least with the main joining region into the openable mold;
d) Extending the premanufactured outboard blade section with an inboard blade section by lamination of one or multiple layers of fiber material in the openable mold, thereby connecting the main joining region of the premanufactured outboard blade section to the inboard blade section.

In embodiments, step c) might in particular include angularly aligning a position of the premanufactured outboard blade section along a longitudinal axis of the wind turbine blade according to a predetermined target positioning. This is important to ensure that the premanufactured outboard blade section and the inboard extension are aligned according to the specifications of the wind turbine blade.

The method steps a) to c) may in particular be executed serially. Any other sequence of execution of the method steps is however possible and covered by the invention as well, which applies to all embodiments of the invention.

The main joining region is adapted to allow for a rigid and durable connection of the premanufactured outboard blade section to the inboard extension and is preferably designed to transfer typical loads along the length of the final wind turbine blade. In other words, the main joining region provides an interface between a fiber material structure of the premanufactured outboard blade section and a fiber material structure of the inboard extension. The rigidity and/or stiffness of the interface can generally be improved by maximizing a surface area of the main joining region.

Contrary to the prior art, the method according to the invention is not based on joining two premanufactured blade sections to create a wind turbine blade but begins with the pre-manufacturing of an outboard blade section that is directly extended with an inboard section in a subsequent step. Thus, with the method according to the invention it is not necessary to premanufacture two blade sections but only one. This is in particular beneficial as the number of process steps is reduced which leads to significantly lowered production cost.

In addition, the method according to the invention further reduces the effort for manufacturing of wind turbine blades as only one blade section is to be provided with a joining region, whereas methods according to the prior art require two joining regions at respective interface locations of the blade sections that are to be joined.

A further advantage of the method according to the invention lies in the improvement of the logistics, especially with internationally interwoven production chains. According to the prior art, the blade sections might be produced separately at different locations which can be located in different countries and are then shipped to a central production location for joining. The method according to the invention offers the potential to significantly decrease (international) transport as only the premanufactured outboard blade section has to be shipped whereas the inboard blade section can be created locally as a direct extension of the premanufactured outboard blade section.

Further, the method according to the invention allows for a modular design of wind turbine blades, wherein one identically premanufactured outboard blade section can be extended with a multitude of different inboard blade sections. The different inboard blade sections can have different lengths and/or profiles, for example to adapt them to certain wind conditions. Additionally or alternatively the different inboard blade sections can have different fixation means so that wind turbine blades produced by the method according to the invention can be attached to different wind turbine types requiring, for example, different root diameters.

Finally, a substantial portion of the method according to the invention can be carried out using existing production technology and infrastructure which is beneficial as this helps to reduce investment cost when changing over to the method according to the invention. For example, the premanufacturing of the outboard blade section is very similar to the production of today's split blade sections.

According to a further embodiment, the main joining region can be an external joining region provided on an outer circumference of the premanufactured outboard blade section. The external joining region can in particular comprise at least partly cured fiber material. It is in particular possible that a laminate thickness of the premanufactured outboard blade section decreases in the main joining region towards the inboard end. The joining region of the premanufactured outboard blade section may be alternatively described as a "transition region" that is complemented by one or multiple layers of fiber material of the inboard blade section after casting.

In other words, the main joining region may taper towards the inboard end of the premanufactured outboard blade section. This "tapering" is then filled by the one or multiple layers of fiber material when laminating the inboard blade section as an extension of the premanufactured outboard blade section.

The term "taper" or "tapering" is to be understood relatively to the intended final contour of the wind turbine blade on its outer side. Given that the wind turbine blade - as well as its inboard and outboard blade sections - decreases both in thickness and chord length from root to tip, a structure that tapers relatively to the intended final contour of the wind turbine blade on its outer side may not be tapering when compared to an imaginary shell of a (right) prism. "Taper" therefore in particular has the meaning of tapering relatively to the intended final contour of the wind turbine blade on its outer side.

In embodiments, the main joining region may extend around the full outer circumference of the inboard end of the premanufactured outboard blade section.

As outlined in the prior art section, today's split blade manufacturing method often involve joining regions provided on the inside of the blade. Joining solutions from the inside of the blade are however technically challenging so that relying on an external joining region offers further potential for efficiency gains.

The invention is however explicitly not limited to above external joining regions but covers any structure and type of the main joining region.

According to a further embodiment, the openable mold can have an inboard open end and an outboard open end and comprise a lower mold part and an upper mold part. The method may comprise
step c1) Placing one or multiple layers of fiber material as a lower material layup on the lower mold part before the premanufactured outboard blade section is inserted into the openable mold.

The fiber material of the lower material layup may be in particular provided in the form of fiber mats having a distinct planar extension. The one or multiple layers of fiber material of the lower material layup may comprise fibers in a dry and/or pre-cast condition. The fiber material may comprise, for example, glass fibers, carbon fibers, aramid fibers and/or natural fibers.

The lower material layup may in particular be executed as a transversal material layup, wherein individual sheets or mats of fiber material are placed on the lower mold part transversally to a longitudinal axis of the mold that corresponds to the longitudinal axis of the wind turbine blade

The lower material layup may additionally comprise core materials such as plastics foam, in particular PET and/or PVC foam, and/or balsa wood. The core materials can be in particular placed between at least two neighboring layers of fiber material of the lower material layup.

Additionally or alternatively, the lower material layup may include placing resin flow means and/or air extraction means in the lower mold part. The resin flow means and/or air extraction means may in particular be placed as a final layer on top of the one or multiple layers of fiber material of the lower material layup. Typical resin flow means include flow ducts and/or flow nets or grids with a low pressure drop or other resin flow enabling structures. Typical air extraction means include semi-permeable membranes, i.e. membranes that allow gases, in particular air, to pass and block the passage of liquids, in particular resin. The permeable membranes can be in particular connected to a vacuum source so that excess air from the mold can be extracted during the lamination process of the inboard blade section.

The lower material layup may be provided with a transversal excess length about a circumferential direction wherein the excess length might be provided to hang off a longitudinal edge of the lower mold part. Such excess length may, in later method steps, be used to create an upper material layup. It is in particular possible that the lower mold part features a gutter or trough along its longitudinal edges in that the transversal excess length of the fiber material of the lower layup can be temporarily stored.

Optionally, before the one or multiple layers of fiber material of the lower material layup are placed on the lower mold part, an inner surface of the lower mold part may be covered with a release material respectively release agent that facilitates later removal of the inboard blade section after casting. Typical release materials may include a foil with low surface tension that is spanned over the lower mold part's inner surface. Typical release agents may include liquids that are sprayed on the lower mold part's inner surface or to the foil to (further) reduce surface tension, for instance liquids containing Polytetrafluoroethylene (PTFE) or other types of fluoropolymers may be used.

The mold parts may in particular include at least one pressure sensor and/or resin detection sensor that allow to adjust and/or regulate a flow of resin material during a casting step. Additionally or alternatively the mold parts may include a temperature regulation system with at least one heating and/or cooling means to regulate the temperature in the mold during curing of the resin material in the casting step. Further additionally or alternatively the mold parts may include at least one integrated flow channel, for example at the mold parts' flanges and/or at other locations, to enable a transfer of resin material from the mold into a cavity surrounded by the mold.

According to a further embodiment, the method may comprise step c2) Placing at least one spar-cap in the lower mold part, in particular between two neighboring layers of fiber material of the lower material layup and/or placing at least one beam in the lower mold part, in particular on the one or multiple layers of fiber material of the lower material layup, wherein in particular said beam is secured in an intended position against the lower mold part with a beam positioning device.

The at least one spar-cap may in particular be provided in the form of a pre-cast part and is in particular embedded between layers of fiber material of the lower material layup. When looking at the lower material layup thickness-wise the spar-cap may be provided at a location of the layer structure that corresponds to a positioning of core materials at circumferentially neighboring locations. Alternatively, the spar-cap may be provided in the form of a dry fiber layup as well which may comprise different fiber types than the rest of the inboard blade section. It is also possible that the spar-cap is provided in the form of a pultruded glass- and/or carbon fiber composite profile.

A spar-cap generally is a part of a wind turbine blade that locally reinforces the blade structure so that forces from the beam, which is often also referred to as a "shear web", can be transferred from a pressure side shell of the blade to a suction side shell of the blade.

The beam may in particular be provided in the form of a pre-cast part. The beam may be in particular arranged on top of the one or multiple layers of fiber material of the lower material layup and may be connected with a lower beam joint to the lower material layup. The beam can be in particular placed in the lower mold part so that it protrudes outwardly from the lower mold part.

A beam or shear web generally is a component of a wind turbine blade that connects the blade shells of the pressure side and the suction side in the interior of the blade and provides shear strength to the blade.

In embodiments, the method may involve placement of more than one spar-cap and/or more than one beam in the lower mold part.

The beam positioning device in particular provides a temporary fixation of the beam against the lower mold part and especially is to be understood as a production tool which will not become a part of the final wind turbine blade.

Step c2) may be partly executed before step c) so that especially the spar-cap is placed in the lower mold part before the premanufactured outboard blade section is inserted into the mold. The placement of the beam may however be executed after the premanufactured outboard blade section is inserted into the mold.

Optionally, step c2) may be executed after or partly parallel to step c1).

According to yet a further embodiment the premanufactured outboard blade section may comprise at least one additional joining region arranged at a functional component, in particular a spar-cap, of the premanufactured outboard blade section, wherein said additional joining region is extended in step d) with a corresponding functional component, in particular a spar-cap, of the inboard blade section.

The additional joining region may be an external joining region as well and can in particular have a larger extension along the longitudinal direction than the main joining region. In particular, the additional joining region can extend from the inboard end of the premanufactured outboard blade section further to an outboard end than the main joining region. The additional joining region may have a limited angular extension around the outer circumference of the premanufactured outboard blade section. In embodiments more than one additional joining region may be provided on the premanufactured outboard blade section, for example two additional joining regions that may in particular be arranged at opposing circumferential positions.

The additional joining region can in particular comprise at least partly cured fiber material. It is in particular possible that a laminate thickness of the premanufactured outboard blade section decreases in the additional joining region towards the inboard end.

In other words, the additional joining region may taper towards the inboard end of the premanufactured outboard blade section. This "tapering" is then filled by one or multiple layers of fiber material when laminating the functional component of the inboard blade section as an extension of the functional component of the premanufactured outboard blade section.

According to a further embodiment, the method may comprise Step d1) Placing at least one mold core, in particular comprising a leading edge mold core part and a trailing edge mold core part, on the lower mold part after said one or multiple layers of fiber material of the lower material layup have been placed on the lower mold part, wherein in particular the at least one beam is arranged between the leading edge mold core part and the trailing edge mold core part and wherein in particular said beam positioning device is removed after the mold core has been placed on the lower mold part.

Step d1) may be in particular executed after step c) so that the mold core is placed on the on the lower mold part after the premanufactured outboard blade section has been inserted into the mold.

The mold core may in particular be provided as an expandable mold core that is expandable at least in the radial direction.

An expandable mold core can comprise suitable mechanical, hydraulic, pneumatic and/or electrical means that allow for a variation of at least one measure in the radial direction. For example, it is possible that a cross section of the mold core can be varied by actuators that change the height and/or the width of the mold core. The mold core might comprise multiple segments that are relatively moveable to achieve said variation of its cross section.

It is in particular possible that both the leading edge mold core part and the trailing edge mold core part are provided as expandable mold cores. Between the leading edge mold core part and the trailing edge mold core part a gap running along the longitudinal direction can be provided that is adapted to receive the beam. After the leading edge mold core part and the trailing edge mold core part have been placed on the lower mold part the beam does not need to be secured by the beam positioning device any more as it is supported by the respective mold core parts.

In embodiments, the mold core respectively each mold core part may be surrounded by one or more layers of a flexible airtight foil or membrane material, wherein typical materials may include polyamide, in particular nylon, or silicone rubber.

In particular the one or more layers of a flexible airtight foil or membrane material surrounding the mold core respectively each mold core part may be treated with a release agent that facilitates later removal of the mold core respectively the mold core parts. Typical release agents may include liquids that are sprayed on the one or more layers of a flexible airtight foil or membrane material to reduce surface tension, for instance liquids containing Polytetrafluoroethylene (PTFE) or other types of fluoropolymers may be used. The release agent may in particular be applied to the one or more layers of a flexible airtight foil or membrane material surrounding the mold core respectively each mold core part before the mold core respectively the mold core parts are placed on the lower mold.

The mold core respectively the mold core parts may be in particular hollow on the inside to allow personnel to walk into the mold core respectively the mold core parts.

According to a further embodiment, the method may comprise step d2) Placing one or multiple layers of fiber material as an upper material layup on top of the mold core, wherein in particular additionally at least one spar-cap is placed on the mold core, in particular between two neighboring layers of fiber material of the upper material layup.

The fiber material of the upper material layup may be in particular provided in the form of fiber mats having a distinct planar extension. The one or multiple layers of fiber material of the lower material layup may comprise fibers in a dry and/or pre-cast condition. The fiber material may comprise, for example, glass fibers, carbon fibers, aramid fibers and/or natural fibers.

The upper material layup may in particular be executed as a transversal material layup, wherein individual sheets or mats of fiber material are placed on the mold core respectively the mold core parts transversally to the longitudinal axis of mold that corresponds to the longitudinal axis of the wind turbine blade.

The upper material layup may additionally comprise core materials such as plastics foam, in particular PET and/or PVC foam, and/or balsa wood. The core materials can be in particular placed between at least two neighboring layers of fiber material of the upper material layup.

Additionally or alternatively, the upper material layup may include placing resin flow means and/or air extraction means on the mold core respectively the mold core parts. The resin flow means and/or air extraction means may in particular be placed as a first layer on top of the mold core respectively the mold core parts before the actual layup of fiber material is begun. Typical resin flow means include flow ducts and/or flow nets or grids with a low pressure drop or other resin flow enabling structures. Typical air extraction means include semi-permeable membranes, i.e. membranes that allow gases, in particular air, to pass and block the passage of liquids, in particular resin. The permeable membranes can be in particular connected to a vacuum source so that excess air from the mold can be extracted during the lamination process of the inboard blade section.

The one or multiple layers of fiber material of the upper material layup may be in particular provided by the fiber material that has been provided during the lower layup with an excess length and that in particular has been stored in the gutter or trough of the lower mold part. Such excess material of the lower layup is then pulled over the mold core respectively the mold core parts to create the upper layup.

According to yet a further embodiment, the method may comprise
step
d3) Arranging the upper mold part on top of the lower mold part, wherein the lower mold part and the upper mold part are sealed against each other at least along a longitudinal interface region with a closure seal, and wherein the openable mold is sealed near its outboard open end around an outer circumference of the premanufactured outboard blade section.

The closure seal is in particular adapted to ensure air tightness between the lower and the upper mold part and, as an effect, ensure that the cavity formed inside of the mold is air tightly sealed against the surroundings.

The closure seal may be in particular provided on a laterally projecting flange of the upper and/or lower mold part. The closure seal may comprise an inflatable and/or deflatable sealing profile or a self-contained flexible sealing profile, in particular comprising an elastomer material, for example silicone- or butyl rubber.

The seal between the openable mold near its outboard open end around an outer circumference of the premanufactured outboard blade section is in particular adapted to ensure air tightness between the mold parts and the outer circumference of the outboard blade section. The seal between the openable mold near its outboard open end around an outer circumference of the premanufactured outboard blade section may comprise similar sealing means as the closure seal. The seal between the openable mold near its outboard open end around an outer circumference of the premanufactured outboard blade section may in particular comprise an inflatable and/or deflatable sealing profile or a self-contained flexible sealing profile that may be arranged in a circumferential groove on an inner side of the mold parts.

According to yet a further embodiment, the mold core may be sealed near its outboard end against an inside of the premanufactured outboard blade section, in particular against an inner circumference of the premanufactured outboard blade section. This can in particular include a seal between the mold core respectively the mold core parts against a beam/shear web of the premanufactured outboard blade section.

The seal between the mold core near its outboard end against an inside of the premanufactured outboard blade section may be in particular done by drawing the one or more layers of flexible airtight foil or membrane material surrounding the mold core respectively the mold core parts towards an outboard side of the premanufactured outboard blade section and sealing them against an inner side, in particular an inner circumference, of the premanufactured outboard blade section. The one or more layers of a flexible airtight foil or membrane material may for example be sealed against the inner side, in particular an inner circumference, of the premanufactured outboard blade section by means of at least one adhesive tape, for example a butyl sealing tape.

Alternatively or additionally the cavity between the mold core and the openable mold may be sealed at the inboard end against the surroundings. This may be, for example, done by drawing the one or more layers of flexible airtight foil or membrane material surrounding the mold core respectively the mold core parts towards an inboard side of the mold and sealing them against the upper and/or lower mold parts, e.g. by means of at least one adhesive tape, for example a butyl sealing tape.

According to a further embodiment, the cavity between the mold core and the openable mold at an outboard longitudinal end may be delimited by the inboard end of the premanufactured outboard blade section with the main joining region. The method may comprise the further steps:
d4) injecting a curable resin into the cavity and
d5) curing the curable resin.

Before the curable resin is injected into the cavity the cavity might be evacuated so that as much air as possible is extracted from the cavity, a driving force for the resin injection is provided and air bubbles are avoided.

For this purpose the mold can be equipped with a resin infusion system comprising at least one resin reservoir, at least one resin flow conduit, at least one overflow container and at least one vacuum source.

Alternatively, the upper and lower material layups may be hardened/cured differently. If the layers of fiber material are provided in the form of so called prepregs the curing may be done, for example, by application of heat and/or UV radiation. If prepregs are used steps d4) and d5) may become obsolete.

According to a further embodiment, the inboard blade section may be a root section of the wind turbine blade and in particular comprises at least one fixation means adapted to fix the wind turbine blade to a hub of a wind turbine. Alternatively or additionally the premanufactured outboard blade section may be a tip section of the wind turbine blade comprising a blade tip. In other words, the premanufactured outboard blade section does not comprise a blade root but comprises the main joining region at its inboard end.

The fixation means may in particular be provided at a root section of the inboard blade section and may include threaded inserts that are spaced along a circumference of the blade root and in particular embedded into a laminate of the inboard blade section.

In other embodiments the premanufactured outboard blade section can be an intermediate outboard section which does not necessarily contain a blade tip. Likewise, the inboard blade section can also be an intermediate inboard section which does not necessarily contain a blade root. Thus, a final wind turbine blade including a root and a tip may be produced by multiply executing the method according to the invention and/or by joining blade segments produced by using the method according to the invention with known joining techniques.

According to a yet further embodiment, the method may be executed in a production facility, in particular a factory building, that has a largest inner extension that is smaller than an overall length of the wind turbine blade to be produced, wherein the premanufactured outboard blade section is at least partly located outside of the production facility during execution of the method. The production equipment, in particular the mold parts and the mold core, are however located inside the production facility so that the respective method steps can be performed inside the production facility.

In particular, at least the inboard end of the premanufactured outboard blade section is located within the production facility during executing of the method. Generally, it is only necessary that an inboard longitudinal section of the premanufactured outboard blade section that is to be arranged in the mold is arranged inside the production facility whereas other further outwardly located longitudinal sections of the premanufactured outboard blade section may be arranged outside the production facility.

To allow the premanufactured outboard blade section to rest at least with an outboard longitudinal section outside the production facility during execution of the method the premanufactured outboard blade section may be premanufactured with a surface coating so that it is not harmed by environmental influences.

As the method according to this embodiment of the invention does not require a production facility with a largest inner extension that is larger than the overall length of the final wind turbine blade, existing infrastructure can be used to produce future generations of wind turbine blades with significantly larger lengths.

According to a further embodiment, the production facility is a factory building and comprises an openable gate that is closed during execution of the method. The gate may comprise an opening through that an outboard longitudinal section of the premanufactured outboard blade section protrudes during execution of the method. In particular, the opening of the openable gate is sealed around an outer circumference of the premanufactured outboard blade section so that both contamination of the inside of the production building and temperature fluctuations due to weather conditions are minimized.

According to a further embodiment, the premanufactured outboard blade section may be supported outside of the production facility on at least one support device, in particular multiple support devices spaced along a longitudinal axis of the premanufactured outboard blade section, wherein the at least one support device in particular comprises at least one support surface that corresponds to a shape of an outer circumference of the premanufactured outboard blade section at a support position.

The support devices can be provided, for example, as support stands that can be made of metal, wood or any other suitable material adapted to carry the load resulting from the weight of the premanufactured outboard blade section. The support devices may be fixed to certain positions on the ground outside of the production facility or may be moveable. As a result of typical blade geometries, the length of the support devices may increase towards an outboard end of the premanufactured outboard blade section.

According to a second aspect, a wind turbine blade manufactured according to the method according to the invention is proposed.

Any embodiment of the first aspect may be combined with any embodiment of the second aspect to obtain another embodiment of the second aspect and vice versa.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows a flow chart of a first embodiment of the method according to the invention; and
Fig. 2 shows a flow chart of a second embodiment of the method according to the invention; and
Fig. 3 shows a flow chart of a third embodiment of the method according to the invention; and
Fig. 4 shows a flow chart of a fourth embodiment of the method according to the invention; and
Fig. 5 shows a flow chart of a fifth embodiment of the method according to the invention; and
Fig. 6 shows a flow chart of a sixth embodiment of the method according to the invention; and
Fig. 7 shows a flow chart of a seventh embodiment of the method according to the invention; and
Fig. 8 shows a isometric view of a wind turbine; and
Fig. 9 shows a schematic view of a wind turbine blade production facility according to the prior art; and
Fig. 10 shows another schematic view of a wind turbine blade production facility according to the prior art; and
Fig. 11 shows yet another schematic view of a wind turbine blade production facility according to the prior art; and
Fig. 12 shows a schematic view of a wind turbine blade according to an embodiment of the invention; and
Fig. 13 shows a schematic view of an outboard blade section of a wind turbine blade according to an embodiment of the invention; and
Fig. 14 shows Detail A of Fig. 13; and
Fig. 15 shows a schematic view of a wind turbine blade production facility for producing an outboard blade section of a wind turbine blade according to an embodiment of the invention; and
Fig. 16 shows a schematic view of a wind turbine blade production facility for producing a wind turbine blade according to an embodiment of the invention; and
Fig. 17 shows a schematic cross-section of a lower mold part for producing a wind turbine blade according to an embodiment of the invention with a lower material layup; and
Fig. 18 shows another schematic view of a wind turbine blade production facility for producing a wind turbine blade according to an embodiment of the invention; and
Fig. 19 shows a schematic cross-section of a lower mold part for producing a wind turbine blade according to an embodiment of the invention with an inserted beam; and
Fig. 20 shows a schematic cross-section of a lower mold part for producing a wind turbine blade according to an embodiment of the invention with inserted mold cores; and
Fig. 21 shows yet another schematic view of a wind turbine blade production facility for producing a wind turbine blade according to an embodiment of the invention; and
Fig. 22 shows a schematic cross-section of a lower mold part for producing a wind turbine blade according to an embodiment of the invention with inserted mold cores and an upper material layup; and
Fig. 23 shows yet another schematic view of a wind turbine blade production facility for producing a wind turbine blade according to an embodiment of the invention; and
Fig. 24 shows a schematic cross-section of a closed openable mold for producing a wind turbine blade according to an embodiment of the invention; and
Fig. 25 shows yet another schematic view of a wind turbine blade production facility for producing a wind turbine blade according to an embodiment of the invention; and
Fig. 26 shows a schematic cross-section of a closed openable mold for producing a wind turbine blade according to an embodiment of the invention with a resin infusion system; and
Fig. 27 shows another schematic cross-section of a closed openable mold for producing a wind turbine blade according to an embodiment of the invention with a resin infusion system; and
Fig. 28 shows yet another schematic view of a wind turbine blade production facility for producing a wind turbine blade according to an embodiment of the invention; and
Fig. 29 shows yet another schematic view of a wind turbine blade production facility for producing a wind turbine blade according to an embodiment of the invention; and
Fig. 30 shows yet another schematic view of a wind turbine blade production facility for producing a wind turbine blade according to an embodiment of the invention; and
Fig. 31 shows yet another schematic view of a wind turbine blade production facility for producing a wind turbine blade according to an embodiment of the invention.

In the Figures, like reference numerals designate like or functionally equivalent elements, unless otherwise indicated.

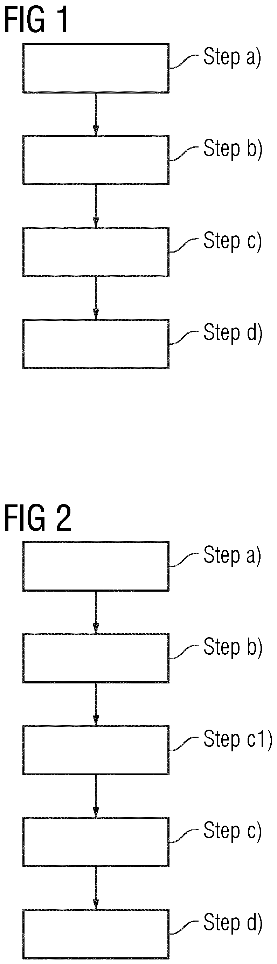

**Fig. 1** shows a flow chart of a first embodiment of the method for manufacturing a wind turbine blade 1 comprising the steps:
a) Premanufacturing an outboard blade section 15 by lamination of one or multiple layers of fiber material, wherein the premanufactured outboard blade section 15 comprises a main joining region 11 at an inboard end 151,
b) Providing an openable mold 3 having the shape of a negative impression of an inboard blade section 16 of the wind turbine blade 1,
c) Inserting the premanufactured outboard blade section 15 at least with the main joining region 11 into the openable mold 3,
d) Extending the premanufactured outboard blade section 15 with an inboard blade section 16 by lamination of one or multiple layers of fiber material 45,46,85,86 in the openable mold 3, thereby connecting the main joining region 11 of the premanufactured outboard blade section 15 to the inboard blade section 16.

**Fig. 2** shows a flow chart of a second embodiment of the method for manufacturing a wind turbine blade 1. It additionally comprises step c1) Placing one or multiple layers of fiber material 45,46 as a lower material layup 4 on the lower mold part 31 before the premanufactured outboard blade section 15 is inserted into the openable mold 3.

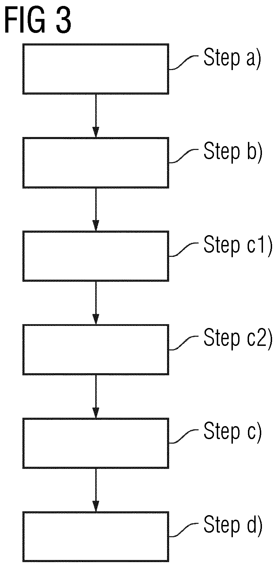

**Fig. 3** shows a flow chart of a third embodiment of the method for manufacturing a wind turbine blade 1. It additionally comprises step c2) Placing at least one spar-cap 44 in the lower mold part 31, in particular between two neighboring layers of fiber material 45,46 of the lower material layup 4, and/or placing at least one beam 5 in the lower mold part 31, in particular on the one or multiple layers of fiber material 45,46 of the lower material layup 4, wherein in particular said beam 5 is secured in an intended position against the lower mold part 31 with a beam positioning device 6.

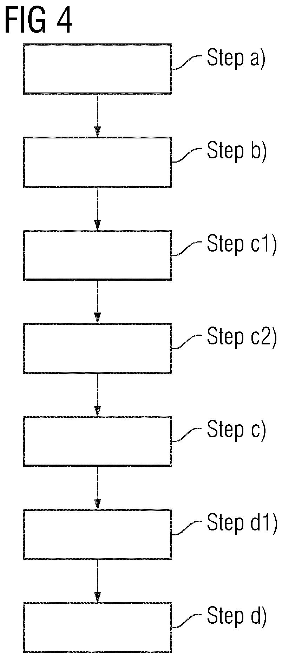

**Fig. 4** shows a flow chart of a fourth embodiment of the method for manufacturing a wind turbine blade 1. It additionally comprises step d1) Placing at least one mold core 7, in particular comprising a leading edge mold core part 71 and a trailing edge mold core part 72, on the lower mold part 31 after said one or multiple layers of fiber material 45,46 of the lower material layup 4 have been placed on the lower mold part 31, wherein in particular the at least one beam 5 is arranged between the leading edge mold core part 71 and the trailing edge mold core part 72 and wherein in particular said beam positioning device 6 is removed after the mold core 7 has been placed on the lower mold part 31.

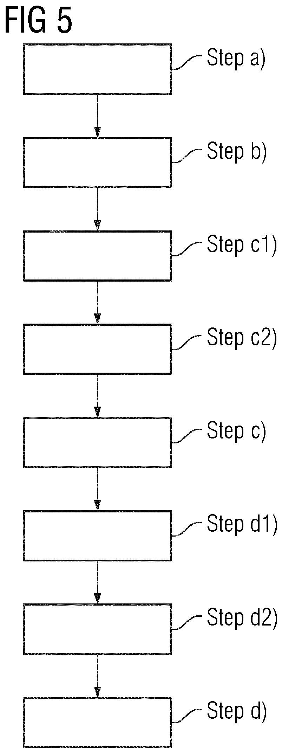

**Fig. 5** shows a flow chart of a fifth embodiment of the method for manufacturing a wind turbine blade 1. It additionally comprises step d2) Placing one or multiple layers of fiber material 85,86 as an upper material layup 8 on top of the mold core 7, wherein in particular additionally at least one spar-cap 84 is placed on the mold core 7, in particular between two neighboring layers of fiber material 85,86 of the upper material layup 8.

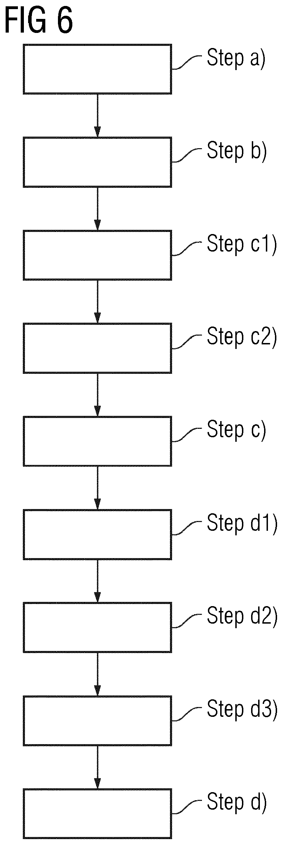

**Fig. 6** shows a flow chart of a sixth embodiment of the method for manufacturing a wind turbine blade 1. It additionally comprises step d3) Arranging the upper mold part 34 on top of the lower mold part 31, wherein the lower mold part 31 and the upper mold part 34 are sealed against each other at least along a longitudinal interface region with a closure seal 36, and wherein the openable mold 3 is sealed near its outboard open end 39 around an outer circumference of the premanufactured outboard blade section 15.

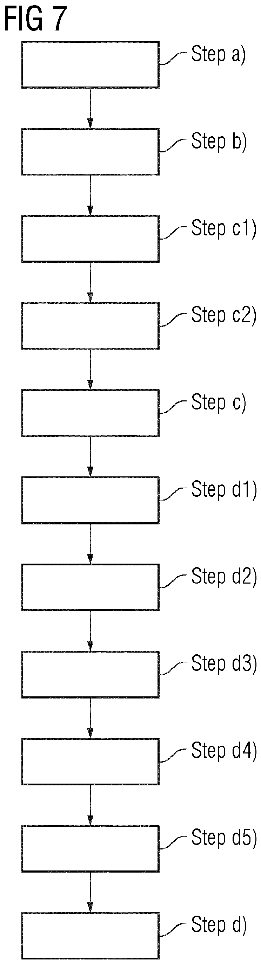

**Fig. 7** shows a flow chart of a seventh embodiment of the method for manufacturing a wind turbine blade 1. It additionally comprises steps d4) injecting a curable resin into the cavity C and d5) curing the curable resin.

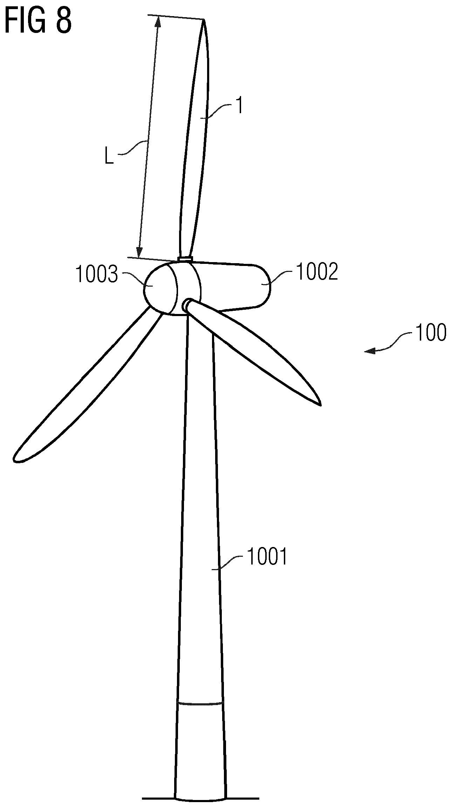

**Fig. 8** shows an isometric view of a wind turbine 100 comprising a tower 1001 and a nacelle 1002 with a rotor hub 1003 to that three wind turbine blades 1 are attached. It is understood, that the wind turbine 100 could also have more or less wind turbine blades 1. The wind turbine blade 1 has an overall length L. With the advancement of technology, the overall length L is continuously increasing and now reaches well over 100 m, sometimes even over 130 m, which is a challenge for wind turbine manufacturers' production systems.

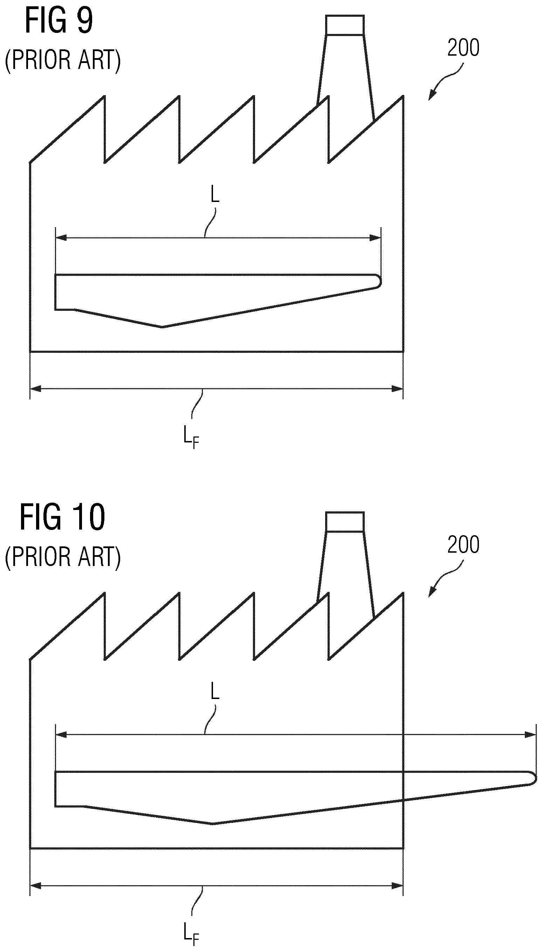

**Fig. 9** shows a schematic view of a wind turbine blade production facility 200 according to the prior art and a typical situation for today's blades with an overall length L that fits into the largest inner extension L_{F} of production facility 200 so that the entire blade can be produced in the production facility 200.

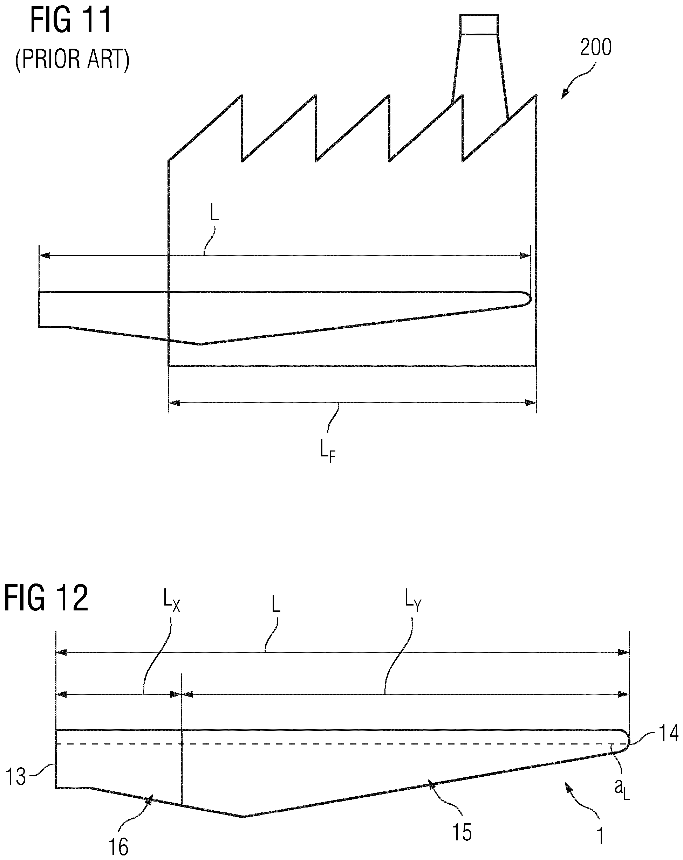

If the overall blade length L however increases as it has been outlined above, the largest inner extension L_{F} of production facility 200 will become too short to receive the full blade which is schematically shown in **Fig. 10** and **Fig. 11**.

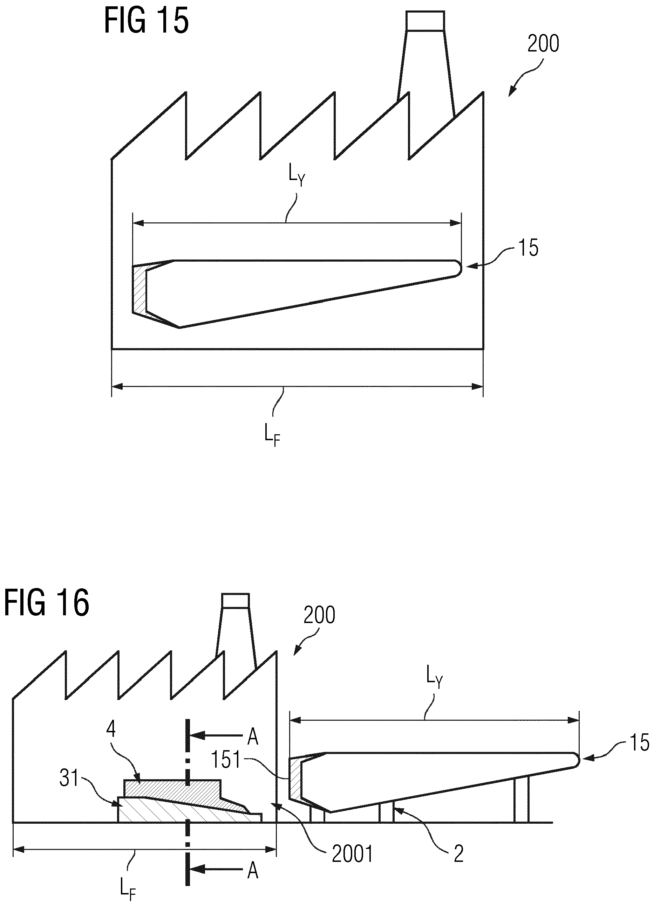

**Fig. 12** shows a schematic view of a wind turbine blade 1 according to an embodiment of the invention with an overall length L. The blade 1 comprises a premanufactured outboard blade section 15 that has been directly extended with an inboard blade section 16 using the production method of the invention. "Directly extended" in particular has the meaning that the final wind turbine blade is not a joined rotor blade, but the result of an extension process based on a premanufactured outboard blade section 15. The outboard blade section 15 has a length L_{y} and the inboard blade section 16 has a length Lₓ, wherein L_{y} + Lₓ = L. The length of the premanufactured outboard blade section 15 is dimensioned so that it can be produced within existing production facilities, i.e. L_{y} is smaller than a largest inner extension L_{F} of a specific production facility 200 (see **Fig. 15**). The outboard blade section 15 is a tip section and comprises a blade tip 14 whereas the inboard blade section 16 is a root section and comprises a blade root 13.

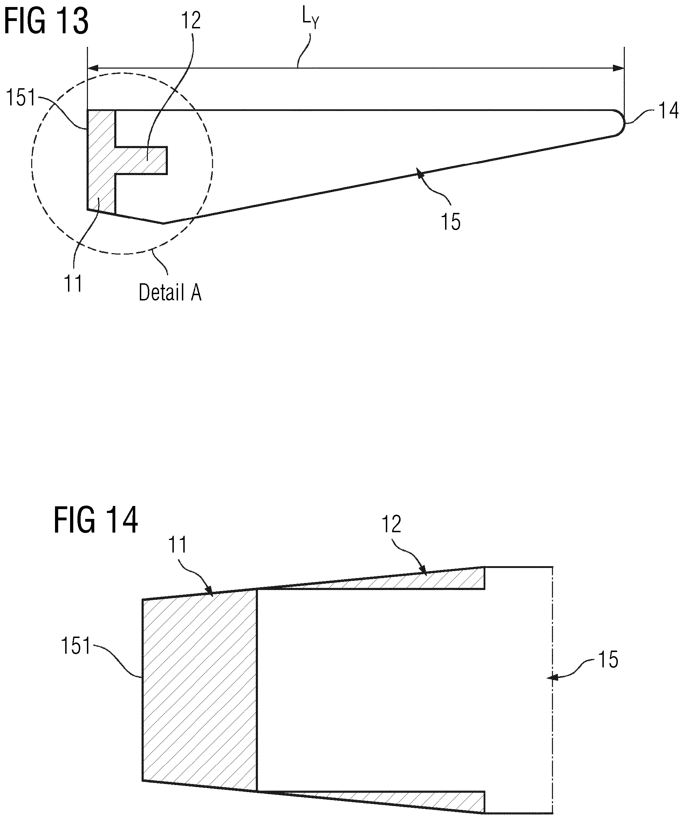

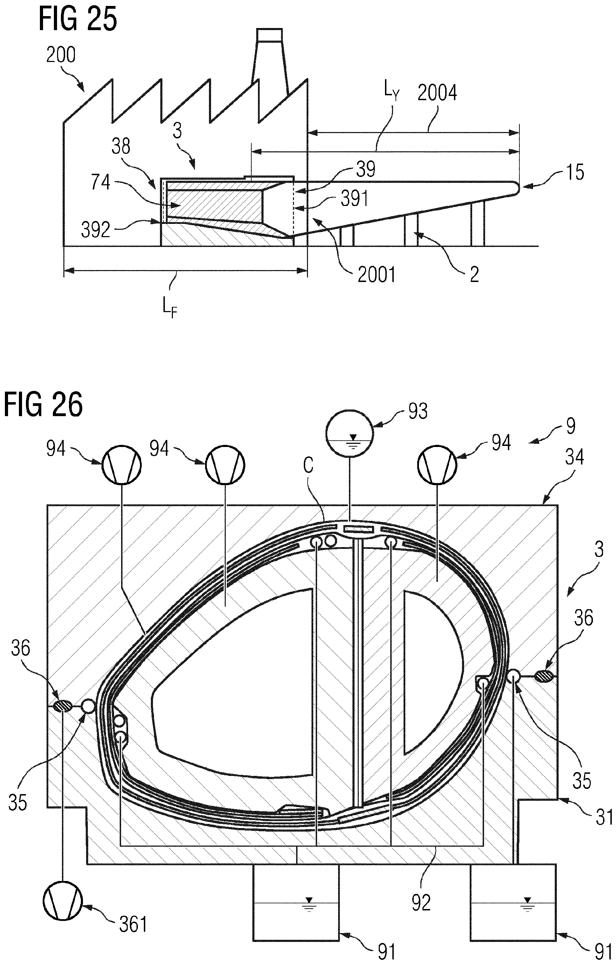

In **Fig. 13** and **Fig. 14** the premanufactured outboard blade section 15 is shown, wherein Fig. 14 shows Detail A of Fig. 13 when viewed from the top of the drawing sheet. The premanufactured outboard blade section 15 comprises a main joining region 11 at the outer circumference of its inboard end 151. Thus, the main joining region 11 is an external joining region. The main joining region 11 may comprise at least partly cured or fully cured fiber material. Further, a laminate thickness of the premanufactured outboard blade section 15 may decrease in the main joining region towards the inboard end 151. The main joining region 11 may be described as "tapering" towards the inboard end 151. This tapering is later filled by one or multiple layers of fiber material when laminating the inboard blade section 16 as an extension of the premanufactured outboard blade section 15. Herein "tapering" is to be understood as a "relative tapering" against an intended final outer contour of the wind turbine blade 1 and not as an "absolute tapering" against an imaginary (right) prism. This can be best seen and understood when looking at Fig. 25.

The main joining region 11 in particular extends around the full outer circumference of the inboard end 151.

In addition, the premanufactured outboard blade section 15 comprises an additional joining region 12 near its inboard end 151. The additional joining region 12 is arranged respectively formed directly at a functional component, in particular a spar-cap, of the premanufactured outboard blade section 15, wherein said additional joining region 12 is later extended with a corresponding functional component, in particular a spar-cap, of the inboard blade section 16.

The additional joining region 12 is arranged at the outer circumference of the premanufactured outboard blade section 15 and thus likewise is an external joining region. The additional joining region 12 has a larger extension along the longitudinal direction a_{L} than the main joining region 11 as it extends from the inboard end 151 further to an outboard end (direction towards the tip 14) than the main joining region 11. The additional joining region 12 has a limited angular extension around the circumference of the premanufactured outboard blade section 15. According to the embodiment, two additional joining regions 12 are provided at opposing circumferential positions of the outboard blade section 15 that relate to a suction side spar-cap and a pressure side spar-cap.

The additional joining region 12 comprises at least partly cured or fully cured fiber material. A laminate thickness of the premanufactured outboard blade section 15 decreases in the additional joining region 12 towards the inboard end. The additional joining region 12 may be described as "tapering" towards the inboard end 151. This tapering is later filled by one or multiple layers of fiber material when laminating the functional component of the inboard blade section 16 as an extension of the functional component of the premanufactured outboard blade section 15.

Generally, for the main and/or additional joining region(s) also the term scarfing region might be used.

**Fig. 15** shows a production facility 200 for manufacturing the outboard blade section 15, wherein the outboard blade section 15 may be produced using state of the art production technology and completely within the inner extension L_{F} of the production facility 200.

For extending of the outboard blade section 15 with the inboard blade section 16 the premanufactured outboard blade section 15 might be transported to a different production facility 200 or the extension might be performed in the same production facility 200.

The production facility 200 for manufacturing the outboard blade section 15 might be referred to as "base factory" while the production facility 200 for the extension of the premanufactured outboard blade section 15 with the inboard blade section 16 might be referred to as "extension factory".

The "base factory" and the "extension factory" might be located at the same or different locations.

**Fig. 16** shows a first schematic view of a wind turbine blade production facility 200 ("extension factory") for extension of the premanufactured outboard blade section 15 with the inboard blade section 16. The premanufactured outboard blade section 15 is parked outside of the production facility 200 on support devices or stands 2 and faces an openable gate 2001 of the production facility 200 with its inboard end 151 having the main and additional joining regions 11,12 thereon. Inside the production facility 200 a lower mold part 31 of an openable mold 3 having the shape of a negative impression of an inboard blade section 16 of the wind turbine blade 1 is provided. On the lower mold part 31 one or multiple layers of fiber material have already been placed as a lower material layup 4 of the inboard extension.

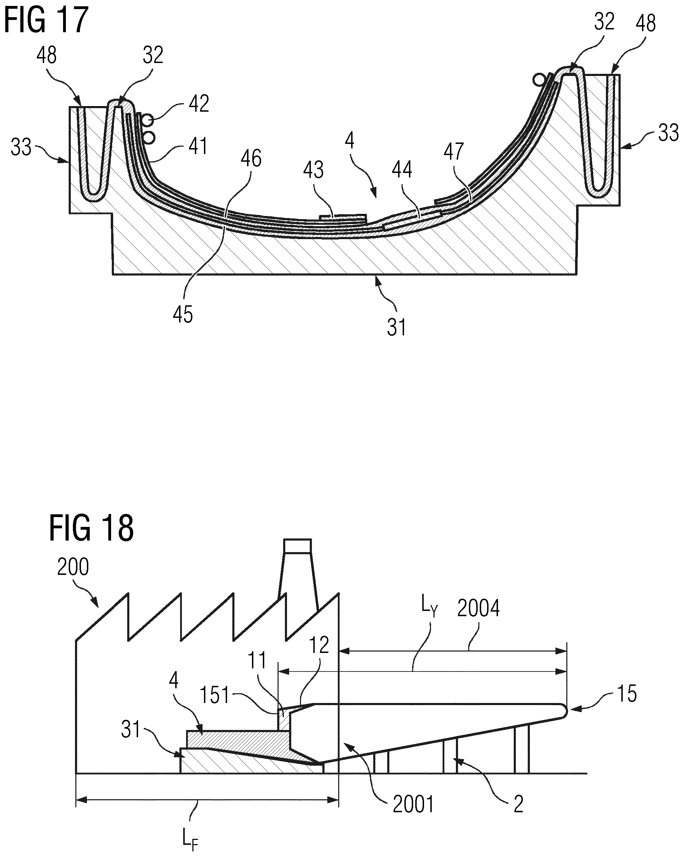

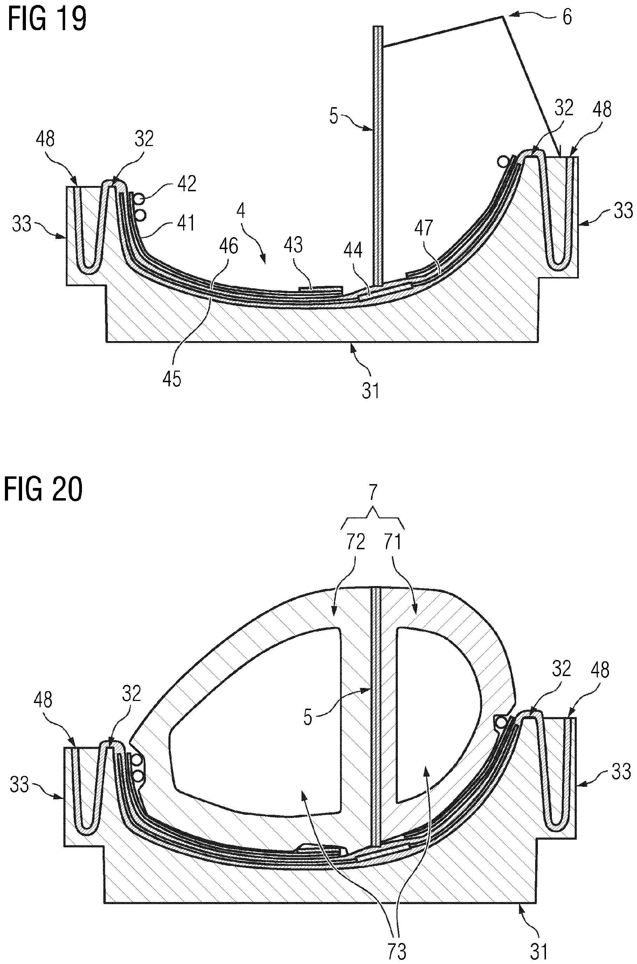

**Fig. 17** shows cross-section A-A of Fig. 16 and allows to understand the lower material layup 4 in more detail. The lower material layup 4 starts with the placement of one or multiple outer layers of fiber material 45 on the lower mold part 31. Subsequently, core materials 47 such as plastics foam, in particular PET and/or PVC foam, and/or balsa wood are placed on the one or multiple outer layers of fiber material 45 followed by one or multiple inner layers of fiber material 46. The core materials 47 are arranged between the one or multiple outer layers of fiber material 45 and the one or multiple inner layers of fiber material 46. The lower material layup 4 further comprises a spar-cap 44 that is provided at a predefined angular position between the one or multiple outer layers of fiber material 45 and the one or multiple inner layers of fiber material 46 and is adapted to reinforce the structure of the inboard blade section locally, in particular at a beam joint location (see Fig. 19).

The one or multiple layers of fiber material 45,46 of the lower material layup 4 may comprise fibers in a dry and/or pre-cast condition. The fiber material 45,46 may comprise, for example, glass fibers, carbon fibers, aramid fibers and/or natural fibers.

The layup of the one or multiple outer layers of fiber material 45 and the one or multiple inner layers of fiber material 46 is in particular executed as a transversal material layup, wherein individual sheets or mats of fiber material 45,46 are placed on the lower mold part 31 transversally, i.e. from the opposing longitudinal edges 32 of the lower mold part 31. The layup of the one or multiple outer layers of fiber material 45 and the one or multiple inner layers of fiber material 46 is provided with a transversal excess length 48 about a circumferential direction wherein the excess length 48 hangs off the longitudinal edges 32 of the lower mold part 31. The excess length 48 is temporarily stored in a gutter or trough 33 of the lower mold part 31 so that it may, in later method steps, be used to create an upper material layup.

On top of the one or multiple inner layers of fiber material 46 resin flow means 41,42 are placed which include at least one flow net and/or grid 41 and at least one flow duct 42. The resin flow means 41,42 are adapted to enable a homogeneous resin flow during the lamination process of the inboard blade section 16. Additionally, at least one air extraction means 43 is placed on top of the one or multiple inner layers of fiber material 46 that allows to extract excess air from the mold during the lamination process of the inboard blade section 16. It is understood that in embodiments the lower layup might comprise more than one air extraction means 43 and/or more than one spar-cap 44.

Now referring to **Fig. 18****.** After the lower material layup 4 is complete the premanufactured outboard blade section 15 is lifted from its parking position outside of the production facility 200 through the openable gate 2002 into the production facility 200 and is inserted into the lower mold part 31 at least with a longitudinal section comprising its main and additional joining regions 11,12. The premanufactured outboard blade section 15 is placed with its inboard end 151 comprising the main and additional joining regions 11,12 on top of the lower material layup 4 present on the lower mold part 31. It may be possible that an additional longitudinal section outbaordly beyond the main and additional joining regions 11,12 is inserted into the mold as well to ensure that the mold can be sealed around an outer circumference of the premanufactured outboard blade section 15.

It is apparent from Fig. 18 that the premanufactured outboard blade section 15 is not received completely within a largest inner extension L_{F} of the production facility 200 ("extension factory") but remains outside with a protruding outboard longitudinal section 2004. To specifically allow for this, the premanufactured outboard blade section 15 may have been premanufactured with a surface coating so that it is not harmed by environmental influences.

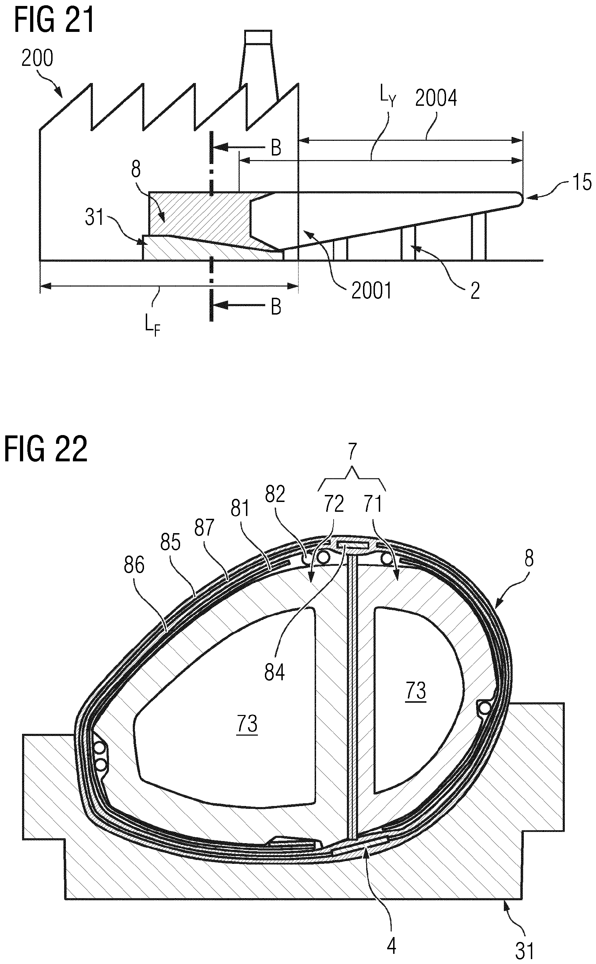

In the next step, which is shown in **Fig. 19** as a cross-section through the lower mold part 31, at least one beam 5 is placed in the lower mold part 31 on top of the lower material layup 4, in particular on top of the one or multiple inner layers of fiber material 46. The lateral position of the beam 5 corresponds with a position of the spar-cap 44. The beam 5 is in later process steps connected to the lower material layup 4 with a lower beam joint and to an upper material layup (see Fig. 22) with an upper beam joint.

The beam 5 is temporarily secured in an intended position against the lower mold part 31 with a beam positioning device 6.

The beam 5 may in particular be provided in the form of a pre-cast part but may also be provided comprising dry fiber material.

In the next step, which is shown in **Fig. 20** as a cross-section through the lower mold part 31, a mold core 7 comprising a leading edge mold core part 72 and a trailing edge mold core part 71 is placed on the lower mold part 31 on top of the lower material layup 4.

Between the leading edge mold core part 71 and the trailing edge mold core part 72 there is a gap running along the longitudinal direction that receives the beam 5. After the leading edge mold core part 71 and the trailing edge mold core part 72 have been placed on the lower mold part 31 the beam 5 does not need to be secured by the beam positioning device 6 any more so that the latter can be removed.

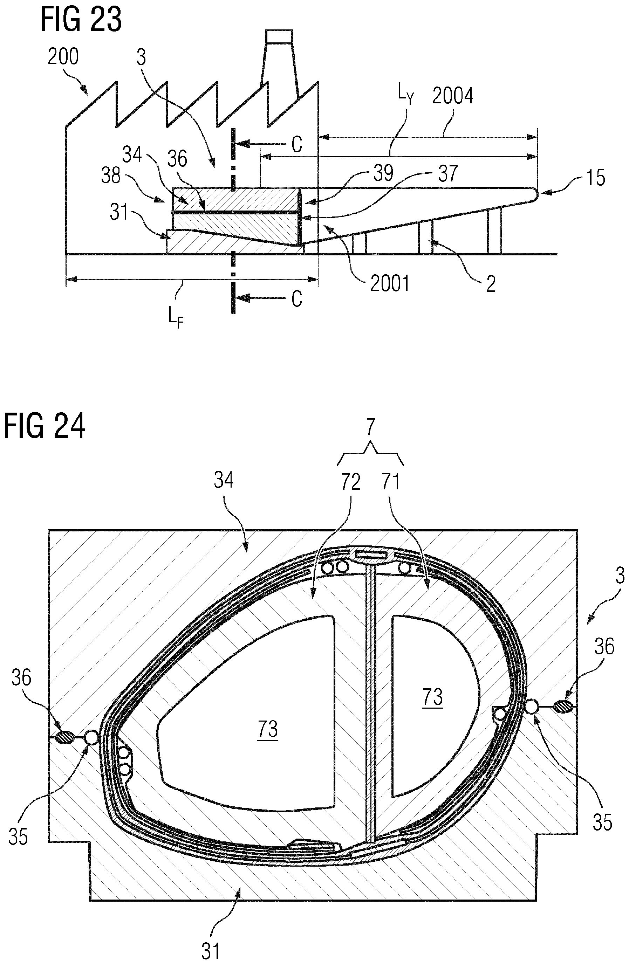

Each mold core part 71,72 is in particular surrounded by one or more layers of a flexible airtight foil or membrane material (see Fig. 25) so that a cavity (see Fig. 24) that is later formed between the lower mold part 31, the upper mold part 34 and the mold core parts 71,72 can be air tightly sealed on the inner side.

The mold core parts 71,72 each have an inner hollow space 73 so that personnel can walk therein, for example to perform manual production steps therein and/or for maintenance reasons.

In a follow-up step the upper material layup 8 is performed which is shown in **Fig. 21** and **Fig. 22****,** wherein Fig. 22 shows cross-section B-B of Fig. 21 and allows to understand the upper material layup 8 in more detail. In general, the upper material layup 8 is performed on top of the mold core 7 respectively the mold core parts 71,72.

The upper material layup 8 starts with the placement of resin flow means 81,82 on the mold core parts 71,72 which include at least one flow net and/or grid 81 and at least one flow duct 82. The resin flow means 81,82 are adapted to enable a homogeneous resin flow during the lamination process of the inboard blade section 16. Subsequently, one or multiple inner layers of fiber material 86 are placed on the resin flow means 81,82 followed by core materials 87 such as plastics foam, in particular PET and/or PVC foam, and/or balsa wood. Afterwards, one or multiple outer layers of fiber material 85 are placed. The core materials 87 are arranged between the one or multiple outer layers of fiber material 85 and the one or multiple inner layers of fiber material 86. The upper material layup 8 further comprises a spar-cap 84 that is provided at a predefined angular position between the one or multiple outer layers of fiber material 85 and the one or multiple inner layers of fiber material 86 and is adapted to reinforce the structure of the inboard blade section locally, in particular at an upper beam 5 joint. It is understood that in embodiments the upper layup might comprise more than one spar-cap 84.

The one or multiple layers of fiber material 85,86 of the upper material layup 8 may comprise fibers in a dry and/or pre-cast condition. The fiber material 85,86 may comprise, for example, glass fibers, carbon fibers, aramid fibers and/or natural fibers.

The layup of the one or multiple outer layers of fiber material 85 and the one or multiple inner layers of fiber material 86 is in particular executed as a transversal material layup, wherein individual sheets or mats of fiber material 85,86 are pulled over the mold core parts 71,72 transversally, i.e. from the opposing longitudinal edges 32 of the lower mold part 31. For the one or multiple outer layers of fiber material 85 and/or the one or multiple inner layers of fiber material 86 in particular the layers of fiber material 45,46 of the lower layup 4 that have been previously stored with an excess length 48 in the gutter or trough 33 of the lower mold part 31 (see Fig. 19) may be used.

Now that the lower and upper material layup 4,8 is complete, the upper mold part 34 can be arranged on the lower mold part 31, which is shown in Fig. **Fig. 23** and **Fig. 24****,** wherein Fig. 24 shows cross-section C-C of Fig. 23.

The openable mold 3 comprising the upper mold part 34 and the lower mold part 31 is air tightly sealed near its outboard open end 39 around an outer circumference of the premanufactured outboard blade section 15 with an outer circumference outboard blade section seal 37. In addition, the mold parts 31,34 are sealed against each other along a longitudinal interface region with a closure seal 36 that is provided on a laterally projecting flange of the upper and/or lower mold parts 31,34. The closure seal 36 may in particular comprise an inflatable and/or deflatable sealing profile. The mold 3 further comprises two resin flow channels 35 formed between either of the laterally projecting flanges of the upper and/or lower mold parts 31,34.

Now referring to **Fig. 25****.** In addition, the cavity C (see Fig. 26) between the mold core 7 respectively the mold core parts 71,71 and the openable mold 3 is sealed from the inside. The mold core 7 respectively the mold core parts 71,71 are sealed near the outboard open end 39 of the mold 3 against an inside of the premanufactured outboard blade section 15 with an outboard internal seal 391. Additionally, the cavity C is sealed at the inboard open end 38 against the surroundings with an inboard internal seal 392.

The outboard internal seal 391 may be in particular provided by drawing the one or more layers of flexible airtight foil or membrane material 74 surrounding the mold core 7 respectively the mold core parts 71,72 towards an outboard side of the premanufactured outboard blade section 15 and sealing them against an inner side, in particular an inner circumference, of the premanufactured outboard blade section 15. The outboard internal seal 391 might be provided separately for the leading edge mold core part 72 and the trailing edge mold core part 71 as the respective "inner chambers" the mold core parts 71,72 are arranged in are separated by the beam 5.

The inboard internal seal 392 may be for example provided by drawing the one or more layers of flexible airtight foil or membrane material 74 surrounding the mold core 7 respectively the mold core parts 71,72 out of the inboard open end 38 of the mold 3 and sealing them against the upper and/or lower mold parts 31,34. The inboard internal seal 392 might be provided separately for the leading edge mold core part 72 and the trailing edge mold core part 71 as the respective "inner chambers" the mold core parts 71,72 are arranged in are separated by the beam 5.

As soon as the cavity C containing the upper and lower material layup 4,8 is air tightly sealed a resin infusion system 9 is connected to the mold 3, which is shown in **Fig. 26****.** The resin infusion system 9 comprises one or multiple resin reservoirs 91 that contain a curable resin in a liquid state, one or multiple resin flow conduits 92 connecting the resin reservoirs 91 to the cavity C, at least one overflow container 93, preferably arranged on top of the mold 3, and one or multiple vacuum sources 94, in particular vacuum pumps, adapted to evacuate the cavity C. The curable resin may in particular comprise an epoxy resin, a polyester and/or a vinyl ester. The curable resin may be provided in the resin reservoirs 91 already mixed with a hardener component or may be mixed with the hardener component during infusion wherein, for example, the hardener component might be provided in a hardener reservoir that may be connected to the resin flow conduits 92 equally so that it may mix with the curable resin when the resin infusion is commenced.

Further, a closure seal pressure source 361 is shown that is adapted to inflate or deflate the closure seal 36 before the resin infusion is started.

At the beginning of the infusion process, the cavity C is still filled with air and/or other residual gases which are evacuated by activation of the vacuum sources 94. As an effect of the applied vacuum, the upper and lower material layup 4,8 is compressed in the cavity C.

In embodiments, the resin reservoirs 91 may be connected to an overpressure source such as a pressurized air tank so that a larger pressure differential between the evacuated cavity C and the pressure level inside the resin reservoirs 91 can be provided which generally assists the resin infusion and especially allows the curable resin to reach remote regions of the cavity C quicker and within a predefined processing time of the curable resin.

The resin flow conduits 92 may include one or multiple manifolds that branch off to different resin injection locations into the cavity C in order to allow for a homogeneous resin injection around the full circumference of the cavity. In addition, also the resin flow channel 35 of the mold 3 is connected by a resin flow conduit 92 to the resin reservoirs 91 to ensure that curable resin can be injected near the cavity's outer surface neighboring the longitudinal edge 32 respectively the flange region.

In embodiments, one or multiple connections between the resin reservoirs 91 and the resin flow conduits 92 may be provided with flow regulation valves, either operable by manual control or by an automated resin flow control system. The resin flow control system may be equipped with an array of temperature, pressure and/or resin detection sensors arranged within the mold and/or the mold core.

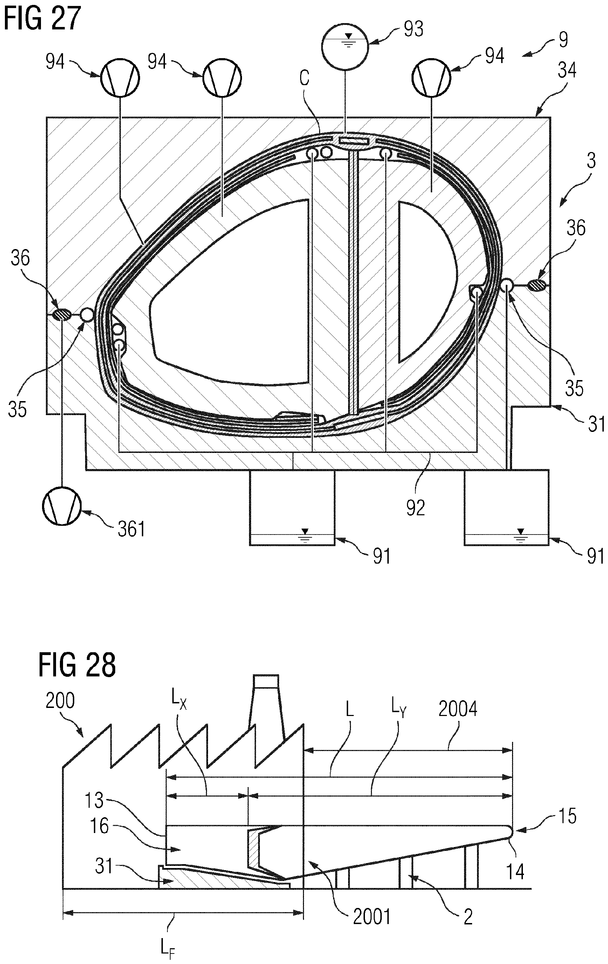

As soon as all required infusion parameters are reached, e.g. in terms of pressure and temperature, the resin injection is commenced as the curable resin flows into the cavity C from the resin reservoirs 91 and through the resin flow conduits 92 under the influence of the pressure difference between the vacuum within the cavity C and the pressure in the resin reservoirs 91 which is shown in **Fig. 27****.**

Once the resin flow front has reached the complete material layup 4,8, including the fiber material provided in a dry condition, overflowing curable resin is collected in the overflow container 93 and the infusion process can be terminated, e.g. by closing the flow regulation valve(s).

The curable resin has now infused the material layup 4,8 of the inboard blade section 16, in particular including fiber material in a dry condition and pre-cast components like spar-caps and the like. Likewise, the curable resin has contacted the main and/or additional joining regions 11,12 of the premanufactured outboard blade section 15 that, after curing of the curable resin will become an integral part with the inboard blade section 16. In this sense, it is important to acknowledge that the method of the invention is about an in-situ extension of a premanufactured outboard blade section through direct extension of the latter with an inboard blade section.

In embodiments, the mold 3 may include a temperature regulation system with at least one heating and/or cooling means to regulate the temperature in the mold 3 during the infusion and/or curing of the curable resin. The temperature regulation may be, for example, active during the infusion process and/or afterwards to initiate a predefined heating and/or and cooling cycle to enhance the curing of the infused resin. Depending on resin type and cavity geometry, the temperature regulation system might be in particular used during and/or after the infusion to regulate heat created by an exothermic reaction of the resin curing process in order to ensure that the material layup 4,8 is not damaged by an uncontrolled increase in temperature.

After the mold 3 has cooled down and the resin is fully cured, all seals between the mold parts 31,34, the mold core parts 71,72 and the premanufactured outboard blade section 15 (see Figs. 23, 24 and 25) are released or removed and the upper mold part 34 is lifted off the lower mold part 31, to access the final wind turbine blade 1 having an inboard blade section 16 as a direct extension of the premanufactured outboard blade section 15 in the form of a single piece, i.e. without seams or significantly visible connection interfaces. This is shown in **Fig. 28****.**

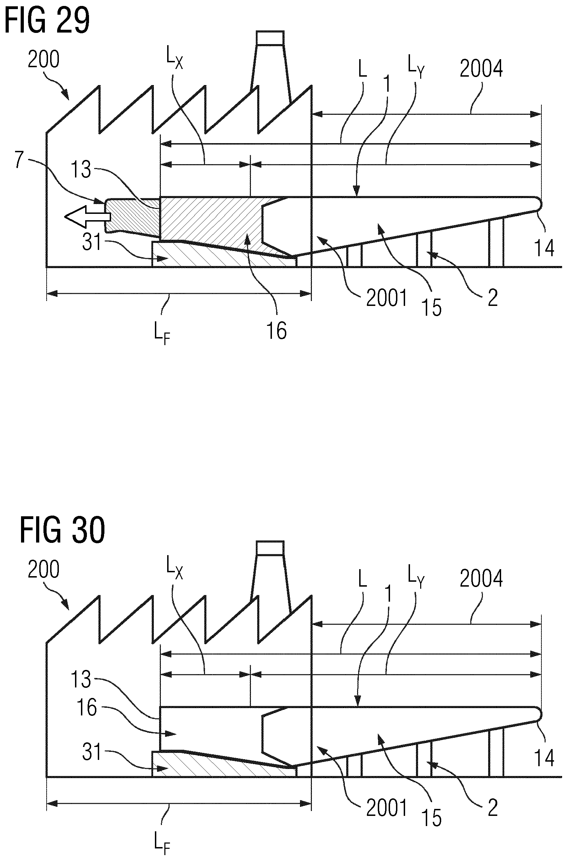

At this or at a later stage of the manufacturing process the mold core 7 is removed, e.g. by pulling it out of the root 13 end of the wind turbine blade 1, which is shown in **Fig. 29****.** Depending on the type of mold core 7, the removal process of the mold core 7 might include deactivation of at least one expansion means of the mold core 7 before it is pulled out of the blade 1.

As the inboard extension 16 is currently still uncoated, i.e. has a raw laminate structure at it outer circumference, a final step can include the application of a surface coating on an outer surface of the inboard blade section 16 which is schematically shown in **Fig. 30****.** As outlined above, the premanufactured outboard blade section 15 preferably has already been coated earlier.

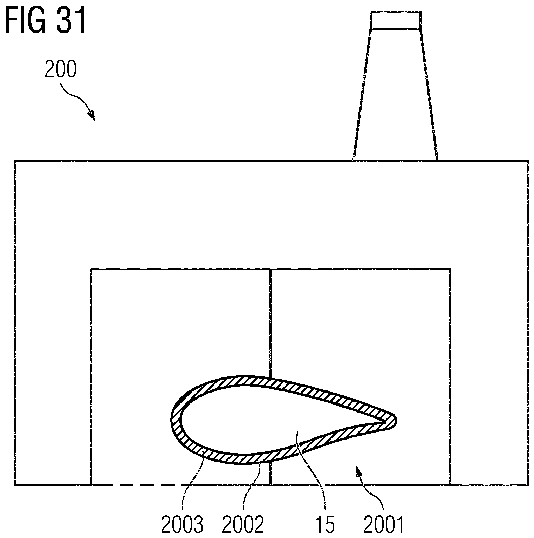

In **Fig. 31** a side view of a production facility 200, in particular a factory building 200, for the execution of the method according to the invention is shown. The production facility 200 comprises an openable gate 2001 having an opening 2002 therein through that a longitudinal section of the premanufactured outboard blade section 15 protrudes (see reference numeral 2004, e.g. in Fig. 30). The opening 2002 is sealed around a circumference of the premanufactured outboard blade section 15 with a sealing 2003 so that both contamination of the inside of the factory building 200 and temperature fluctuations due to weather conditions are minimized. The sealing 2003 might include any sealing type that the skilled person deems functionable for this purpose.

Although the present invention has been described in accordance with preferred embodiments, it is obvious for the person skilled in the art that modifications are possible in all embodiments.

## Claims

1. Method for manufacturing a wind turbine blade (1), comprising the steps:
a) Premanufacturing an outboard blade section (15) by lamination of one or multiple layers of fiber material, wherein the premanufactured outboard blade section (15) comprises a main joining region (11) at an inboard end (151),
b) Providing an openable mold (3) having the shape of a negative impression of an inboard blade section (16) of the wind turbine blade (1),
c) Inserting the premanufactured outboard blade section (15) at least with the main joining region (11) into the openable mold (3),
d) Extending the premanufactured outboard blade section (15) with an inboard blade section (16) by lamination of one or multiple layers of fiber material (45,46,85,86) in the openable mold (3), thereby connecting the main joining region (11) of the premanufactured outboard blade section (15) to the inboard blade section (16).

2. Method according to claim 1, wherein the main joining region (11) is an external joining region provided on an outer circumference of the premanufactured outboard blade section (15) and in particular comprises at least partly cured fiber material, wherein in particular a laminate thickness of the premanufactured outboard blade section (15) decreases in the main joining region (11) towards the inboard end (151).

3. Method according to claim 1 or 2, wherein the openable mold (3) has an inboard open end (38) and an outboard open end (39) and comprises a lower mold part (31) and an upper mold part (34), and wherein the method comprises step c1) Placing one or multiple layers of fiber material (45,46) as a lower material layup (4) on the lower mold part (31) before the premanufactured outboard blade section (15) is inserted into the openable mold (3).

4. Method according to any of the claims 1 - 3,
comprising step c2) Placing at least one spar-cap (44) in the lower mold part (31), in particular between two neighboring layers of fiber material (45,46) of the lower material layup (4), and/or placing at least one beam (5) in the lower mold part (31), in particular on the one or multiple layers of fiber material (45,46) of the lower material layup (4), wherein in particular said beam (5) is secured in an intended position against the lower mold part (31) with a beam positioning device (6).

5. Method according to any of the claims 1 - 4,
wherein the premanufactured outboard blade section (15) comprises at least one additional joining region (12) arranged at a functional component, in particular a spar-cap, of the premanufactured outboard blade section (15), wherein said additional joining region (12) is extended in step d) with a corresponding functional component, in particular a spar-cap (44,84), of the inboard blade section (16).

6. Method according to any of the claims 1 - 5,
comprising step
d1) Placing at least one mold core (7), in particular comprising a leading edge mold core part (71) and a trailing edge mold core part (72), on the lower mold part (31) after said one or multiple layers of fiber material (45,46) of the lower material layup (4) have been placed on the lower mold part (31), wherein in particular the at least one beam (5) is arranged between the leading edge mold core part (71) and the trailing edge mold core part (72) and wherein in particular said beam positioning device (6) is removed after the mold core (7) has been placed on the lower mold part (31).

7. Method according to claim 6,
comprising step
d2) Placing one or multiple layers of fiber material (85,86) as an upper material layup (8) on top of the mold core (7), wherein in particular additionally at least one spar-cap (84) is placed on the mold core (7), in particular between two neighboring layers of fiber material (85,86) of the upper material layup (8).

8. Method according to any of the claims 3 - 7, comprising step
d3) Arranging the upper mold part (34) on top of the lower mold part (31), wherein the lower mold part (31) and the upper mold part (34) are sealed against each other at least along a longitudinal interface region with a closure seal (36), and wherein the openable mold (3) is sealed near its outboard open end (39) around an outer circumference of the premanufactured outboard blade section (15).

9. Method according to any of the claims 3 - 8, wherein
the mold core (7) is sealed near its outboard end against an inside of the premanufactured outboard blade section (15), in particular against an inner circumference of the premanufactured outboard blade section (15) and/or wherein a cavity (C) between the mold core (7) and the openable mold (3) is sealed at the inboard end (38) against the surroundings.

10. Method according to claim 9, wherein the cavity (C) between the mold core (7) and the openable mold (3) at an outboard longitudinal end is delimited by the inboard end (151) of the premanufactured outboard blade section (15) with the main joining region (11), wherein the method comprises the steps
d4) injecting a curable resin into the cavity (C) and
d5) curing the curable resin.

11. Method according to any of the preceding claims, wherein the inboard blade section (16) is a root (13) section and in particular comprises at least one fixation means adapted to fix the wind turbine blade (1) to a hub (1003) of a wind turbine (100) and/or
wherein the premanufactured outboard blade section (15) is a tip (14) section of the wind turbine blade (1) comprising a blade tip (14).

12. Method according to any of the preceding claims,
wherein the method is executed in a production facility (200), in particular a factory building (200), that has a largest inner extension (L_{F}) that is smaller than an overall length (L) of the wind turbine blade (1), wherein the premanufactured outboard blade section (15) is at least partly located outside of the production facility (200) during execution of the method.

13. Method according to claim 12, wherein the production facility (200) is a factory building (200) and comprises an openable gate (2001) that is closed during execution of the method and comprises an opening (2002) through that an outboard longitudinal section (2004) of the premanufactured outboard blade section (15) protrudes during execution of the method, wherein in particular the opening (2002) of the openable gate (2001) is sealed around an outer circumference of the premanufactured outboard blade section (15).

14. Method according to claim 12 or 13,
wherein the premanufactured outboard blade section (15) is supported outside of the production facility (200) on at least one support device (2), in particular multiple support devices (2) spaced along a longitudinal axis (a_{L}) of the premanufactured outboard blade section (15), wherein the at least one support device (2) in particular comprises at least one support surface that corresponds to a shape of an outer circumference of the premanufactured outboard blade section (15) at a support position.

15. Wind turbine blade (1) manufactured according to the method according to any of the preceding claims.
